# EUROPEAN PATENT APPLICATION

(11) **EP 1 445 779 A2**
(43) Date of publication of application: **11.08.2004**
(21) Application number: 04002360.8
(22) Date of filing: 03.02.2004
(51) Int. Cl.: H01F 3/02, H01F 41/02, H02K 15/12

(54) **Corrosion-resistant laminated steel part and corrosion-proofing method for laminated steel parts**

(30) Priority: 04.02.2003 JP 2003027424
(71) Applicant: Minebea Co., Ltd., Nagano-ken 389-0293 (JP)
(72) Inventor: Namiki, Shinichi, Minebea Co., Ltd., Otaku Tokyo 143-8543 (JP); Sakamoto, Kazunori, Minebea Co., Ltd., Otaku Tokyo 143-8543 (JP)
(74) Representative: Konle, Tilmar, Dipl.-Ing.

(57) **Abstract**

A corrosion prevention method includes coating a lamination (10) of steel layers (11). The lamination (10) is vacuum-impregnated with an acrylic resin (40) having a high permeability. The acrylic resin (40) fills the gaps between the steel layers of the lamination (10) and is cured. Then, an insulation coating is applied using anion electrodeposition. The gaps and edges of the steel layers (11) are protected by the highly corrosion-resistant resin (40). Consequently, the lamination (10) is highly corrosion-resistant.

## Description

### BACKGROUND OF THE INVENTION

The present invention relates to a corrosion prevention method for laminated silicon steel plates.

A conventional resolver that is used to detect a deviation angle includes a rotatable assembled rotor stack in a stator stack. The stator stack includes a coiled excitation winding and an output winding around a multiplicity of magnetic poles.

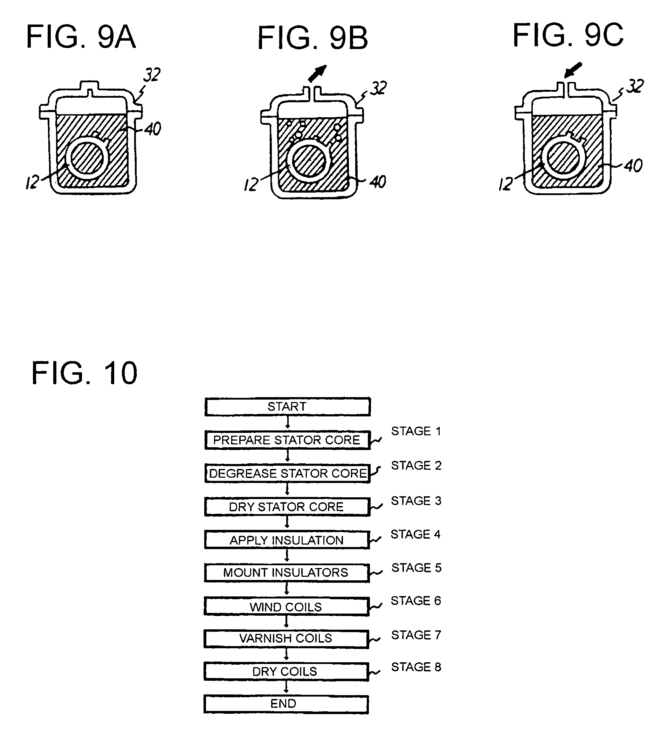

In the conventional resolver, the stator stack and rotor stack include laminated, thin silicon steel plates that are press punched into a ring shape. The manufacturing method for the stator stack is generally explained in accordance with the process flow chart shown in FIG. 10 as follows.

Namely, ring-shaped yoke materials are obtained by press punching thin silicon steel plates, and then, the yoke materials are laminated and fixed with crimping to obtain a stator core. Next, the stator core is degreased and dried. Then, an insulation treatment is carried out by applying a cation electro deposition coating to the stator core as an insulation coating.

Next, insulators, which include insulating material such as resin, are mounted on both sides of the stator core. A coil excitation winding and an output winding are wound around the magnetic poles. Then, the coiled magnetic poles are varnished so that the coiled excitation winding and the output winding will not shift due to a temperature change or vibration. The coiled magnetic poles are dried to complete the entire process, and the desired stator stack is obtained. The rotor stack is manufactured through a similar process.

The stator stack and rotor stack that are manufactured through the above-mentioned processes are subjected to saltwater spraying (for example, continuous spraying of 5% saltwater for 96 hours) for corrosion resistance testing.

However, the laminated silicon steel parts such as the stator stack and rotor stack are obtained by laminating thin silicon steel plates and fixing them with by crimping. Therefore, there has been a problem in that minute gaps are inevitably produced between the silicon steel plates. Saltwater invades the gaps, and corrosion results. In other words, there has been a problem in that the gaps between the silicon steel plates are not treated with an insulation coating. Therefore, the plates are vulnerable to corrosion from the saltwater testing.

In addition, a cation electro deposition coating and a fluoridated coating have been mainly employed as insulation coatings. These coating methods have inferior edge covering ability, and consequently, there has been corrosion at the edge of the laminated silicon steel plates.

Therefore, a test was carried out by placing the parts in a saltwater protection case so that they could endure the saltwater spraying test; however, these methods complicate the testing facility and increase costs.

### SUMMARY OF THE INVENTION

In view of the above, a corrosion prevention method for laminated silicon steel plates parts is provided that allows the steel parts to have saltwater protection. Consequently, a saltwater protection test can be simplified and costs are decreased.

In order to achieve these objectives, the present invention includes steel parts that are vacuum-impregnated with an acrylic resin having a high permeability prior to applying an insulation coating. A corrosion prevention method includes using acrylic resin as a filling between the gaps and around the edges of the laminated steel parts and, subsequently, curing the acrylic resin.

Therefore, the gaps and edges of the steel parts are protected by a highly corrosion-resistant resin by curing the acrylic resin. Consequently, the steel parts re highly corrosion-resistant. Therefore, the saltwater protection case that is used during the conventional saltwater spray testing of the steel parts is no longer required, which simplifies the testing facility and reduces costs.

Further, the vacuum impregnation of the steel parts with the acrylic resin is carried out such that the steel parts are dipped in a vacuum container of acrylic resin. Air is exhausted from the vacuum container using a vacuum, and then pressure is applied inside the vacuum container.

Therefore, the acrylic resin permeates the gaps between the parts by vacuum impregnation. The inside of the vacuum container is further pressurized, ensuring the filling of the gaps between the steel parts by the acrylic resin.

Furthermore, the curing of the acrylic resin is carried out by immersing the steel parts in warm water. Therefore, the acrylic resin, which is a thermosetting resin, can be thoroughly cured by heat from the warm water.

Further, a shot blasting treatment is applied to the steel parts after the acrylic resin is cured. Therefore, excessive cured resin that cannot be removed by water rinsing can be completely removed from the parts using the shot blast treatment.

An insulation coating is applied to the steel parts by anion electro deposition. Therefore, an anion electro deposition coating that has a high edge-covering ability is employed as an insulation coating, allowing a sufficient insulation coating on the edges of the steel parts. Consequently, the occurrence of corrosion on these portions is prevented due to the increased corrosion resistance of the edges.

### BRIEF DESCRIPTION OF THE DRAWINGS

The accompanying figures, in which like reference numerals refer to identical or functionally similar elements and which together with the detailed description below are incorporated in and form part of the specification, serve to further illustrate preferred embodiments and to explain various principles and advantages all in accordance with the present invention.

FIG. 1 shows a frontal view of a resolver of the present invention.

FIG. 2 is a side view of a resolver of the present invention.

FIG. 3 is a frontal view of the stator core of the stator stack of the resolver of Figures 1 and 2.

FIG. 4 is a cross-sectional taken along the line 4-4 in Figure 3.

FIG. 5 is a diagrammatic, partial cross sectional view taken along line 5-5 of Fig. 4.

FIG. 6 is a flowchart that shows the manufacturing process of the stator stack of the resolver of Figures 1 and 2.

FIG. 7 is a side view of a resin impregnation facility used to administer the method of the present invention.

FIG. 8 is a plan view of a resin impregnation facility of Fig. 6.

FIG. 9A, 9B, and 9C are schematic cross-sectional views that show a resin impregnation operation in the resin impregnation tank in the order of the process steps.

FIG. 10 is a flowchart that shows a conventional manufacturing method for a stator stack of a resolver.

### DETAILED DESCRIPTION OF THE PREFERRED EMBODIMENTS

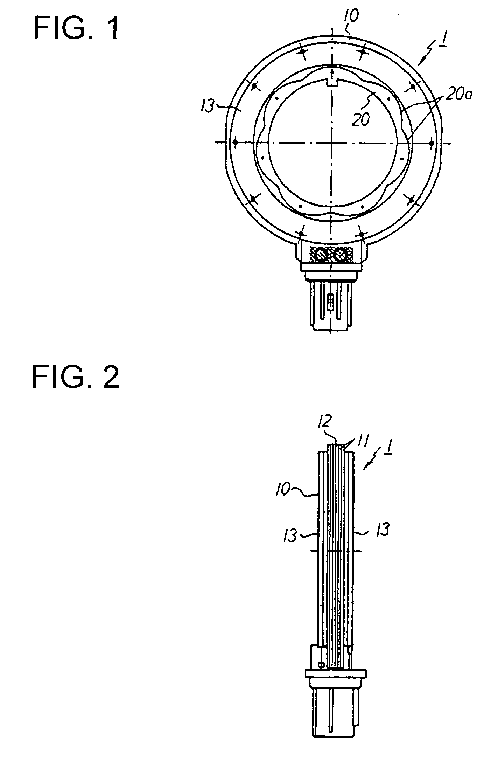

The resolver 1 shown in Figures 1 and 2 is used to detect a deviation angle and includes a rotatable, assembled annular rotor stack 20 on the inside of the annular stator stack 10.

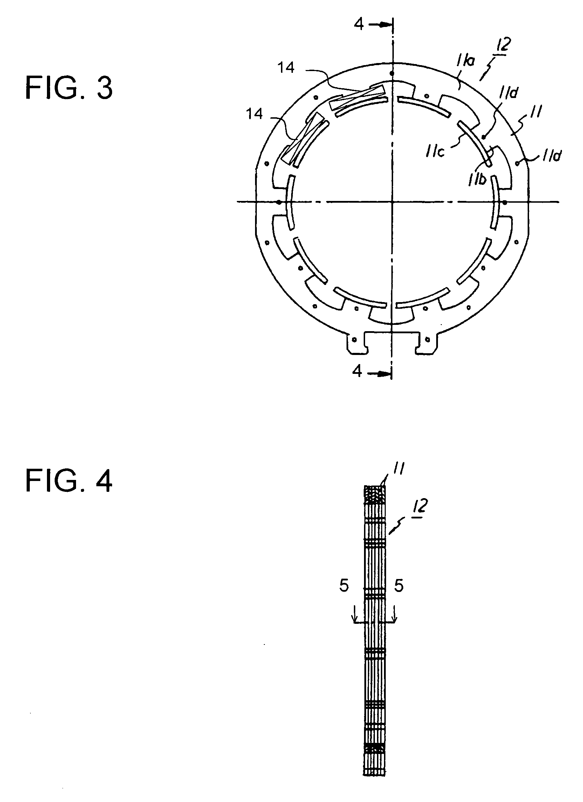

A multiplicity of yoke layers 11, which are made by press punching thin silicon steel plates in the shape shown in Figure 3, are laminated to form a stack 10 and are fixed by crimping to create a stator core 12.
Then, insulators 13, which include insulation material such as resin, are mounted on both sides of the stator core 12.

As shown in Figure 3, fixed magnetic poles 11b project inwardly and radially from the internal surface of a yoke ring 11a. Arc-shaped fixed magnetic teeth 11c are formed on the tips of each fixed magnetic pole 11b in an integral manner. In addition, a multiplicity of dowels 11d for crimping are formed on the yoke ring 11a and fixed magnetic poles 11b of each yoke layer 11.

The rotor stack 20 includes a multiplicity of layers formed by press punching thin silicon steel plates in the shape shown in Figure 1. The layers are laminated and fixed by crimping. The rotor stack 20 is formed in an approximate flower petal shape, and a plurality of projections 20a, are formed along the periphery of the stack 20 as shown.

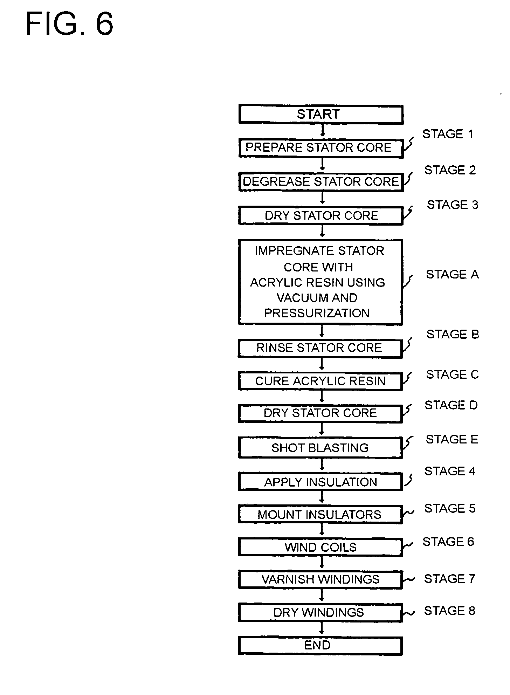

An example of the manufacturing process for the stator stack 10 is described in accordance with the flow chart in FIG. 6.

The manufacturing process of the stator stack 10 is described as follows and includes adding a resin impregnation stage to a corrosion prevention method prior to applying an insulation coating. Further, an anion electro deposition coating is employed (stage 4 of Fig. 6) to provide a coating of insulation instead of the conventional cation electro deposition coating (stage 4 of FIG. 10).

During the manufacturing of the stator stack 10, first, annular yoke layers 11, as shown in Figure 3, are formed by press punching thin silicon steel plates.
The yoke layers 11 are laminated, and a number of dowels are crimped to fix the yoke layers 11. Thus, the stator core 12, as shown in Figure 3, is formed (stage 1 in FIG. 6). After that, the stator core 12 is degreased (stage 2), and dried (stage 3), and then the corrosion prevention method of the present invention is performed on the stator core 12.

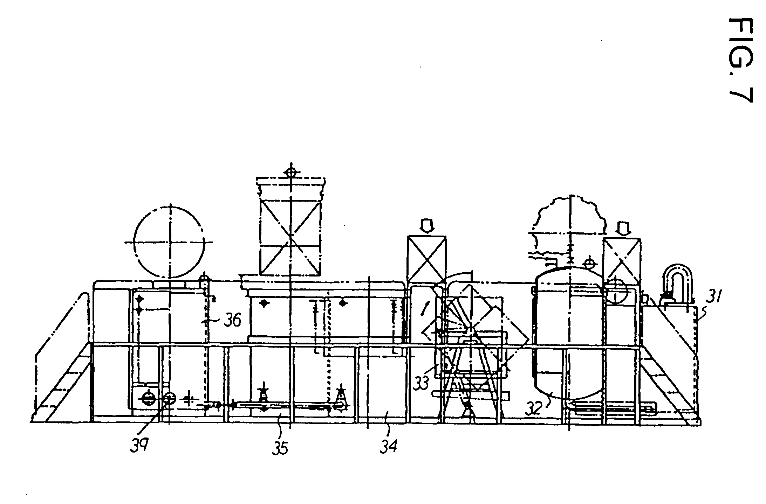

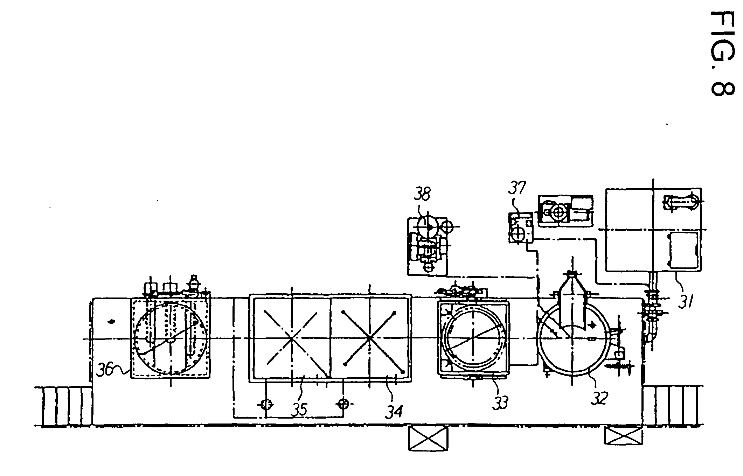

The schematic structure of a resin impregnation facility to perform the corrosion prevention method of the present invention is shown in Figures 6 and 7. FIG. 7 is a side view of the resin impregnation facility and FIG. 8 is a plan view of the resin impregnation facility.

The parts of the resin impregnation facility are listed from right to left of Figures 6 and 7 as follows: a supply tank 31, a resin impregnation tank 32, an adhered liquid collector 33, a primary washing tank 34, a secondary washing tank 35, and a thermosetting tank 36.

A highly permeable acrylic resin, which is an un-cured liquid thermosetting resin, is contained in the supply tank 31. The acrylic resin is maintained at or below a designated temperature (at or below the setting temperature) by being chilled by freezer 37 in FIG. 8, which is installed near the supply tank 31 to prevent the resin from curing.

In addition, the freezer 37 is connected to the resin impregnation tank 32. The acrylic resin that is supplied from the supply tank 31 and contained in the resin impregnation tank 32 is also chilled by the freezer 37 so that its temperature is maintained at or below a designated value (at or below the setting temperature) to prevent it from curing.

Also, the vacuum pump 38, which is installed near the adhered liquid collector 33 and primary washing tank 34, is connected to the resin impregnation tank 32.
An air compressor, which is not shown in the drawings, is connected to the vacuum pump 38 as a pressure source.

Furthermore, warm water at a designated temperature (a temperature at or above the setting temperature of the acrylic resin) is contained in the thermosetting tank 36. The warm water is maintained at the designated temperature by being heated by a sheath heater 39 in FIG. 7.

The corrosion prevention method of the present invention, which is applied by using the above-mentioned resin impregnation facility, is illustrated in FIGS. 6 to 9. FIGS. 9A, 9B and 9C show the resin impregnation operation in the resin impregnation tank 32 in the order of the process steps (dipping, vacuum application, and pressure application).

The stator core 12 that is degreased in process 2 and dried in process 3, as shown in FIG. 6, is vacuum-impregnated with acrylic resin in the resin impregnation facility of FIGS. 7 and 8 (stage A in FIG. 6).

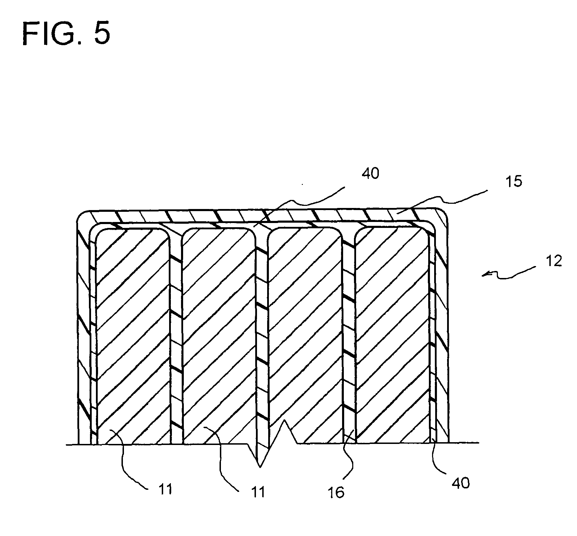

As shown in FIG. 9A, uncured liquid acrylic resin 40 is contained in the resin impregnation tank 32, and the stator core is dipped in the acrylic resin 40. Next, by driving the vacuum pump 38 (see FIG. 8), a vacuum is created inside the resin impregnation 32 as shown in FIG. 9B. The arrow in Fig. 9B represents the outflow of air. Thus, air from gaps 16 (See Fig. 5), which exist between the steel plates, or yoke layers 11, of the stator core 12 is exhausted to the outside of the resin impregnation tank 32. At that point, the highly permeable acrylic resin 40 has sufficiently permeated into the gaps 16 of the stator core 12. The gaps 16 in Fig. 5 are exaggerated and simplified for ease of illustration. Also, the number of annular yoke plates 11 is not necessarily four, as shown in Fig. 5.

Finally, an air compressor, which is not shown in the drawings, is operated to supply compressed air into the resin impregnation tank 32 as shown in FIG. 9C, and the inside of the resin impregnation tank 32 is thus pressurized. The arrow in Fig. 9C represents the inflow of air. Then, the acrylic resin thoroughly permeates and fills the gaps 16 of the stator core 12.

As described above, the stator core 12, in which acrylic resin is vacuum-impregnated, is brought to the adhered liquid collector 33, which is shown in FIG. 7 and FIG. 8, and the excess acrylic resin adhering to the stator core 12 is removed and collected.

Next, the stator core 12 is rinsed with water, in two stages, with the primary washing tank 34 and secondary washing tank 35 (stage B in FIG. 6). The stator core 12 is conveyed to the thermosetting tank 36, and the impregnated acrylic resin is cured (stage C in FIG. 6). Specifically, the rinsed stator core 12 is dipped in warm water, which is contained in the thermosetting tank 36. Then, the acrylic resin that has impregnated the gaps 16 of the stator core 12 is cured by heating with to a designated temperature. The cured acrylic resin thoroughly fills the gaps 16 of the stator core 12.

As described above, when the acrylic resin that impregnates the stator core 12 is cured, stator core 12 is removed from the thermosetting tank 36 and dried (stage D in FIG. 6). A shot blasting treatment is applied to the stator core 12 (stage E in FIG. 6) to completely remove the excess cured resin that was not removed by the rinsing.

Through the above-mentioned sequential process (stages A to E in FIG. 6), the corrosion prevention method of the present invention is performed on the stator core 12.

An insulation coating is applied to the stator core 12 after the corrosion prevention treatment.
In this embodiment of the invention, an anion electro deposition coating (stage 4 in FIG. 6) is employed instead of the conventional cation electro deposition coating of FIG. 10. Here, the anion electro deposition coating has good edge-covering ability and therefore a sufficient insulation coating can be applied, which increases the corrosion-resistance of the edges of the stator core 12. Therefore, corrosion on these portions is thoroughly prevented.

A stator stack 10 as shown in Figures 1 and 2 is formed as follows. Insulators 13, as shown in Figures 1 and 2, which include insulation material such as resin, are mounted on opposite sides of the stator core 12 (stage 5 in FIG. 6). Then, windings 14, which include an excitation winding and an output winding and which are schematically represented in Fig 3, are coiled around fixed magnetic poles 11b of the stator core 12 (stage 6 in FIG. 6). Next, the magnetic poles 11b, about which the coils, or windings, are wound, are varnished so that the coiled excitation winding and output winding will not shift due to temperature changes or vibrations (stage 7 in FIG. 6). Then, the coiled magnetic poles 11b are dried (stage 8 in FIG. 6) to complete the process of making the stator stack 10.

In accordance with the corrosion protection method of the present invention, the curing of an acrylic resin that fills the gaps and covers the edges of the stator core 12 provides protection of these areas since the resin is highly corrosion-resistant. This ensures a high corrosion-resistance for the stator core 12 (the stator stack 10). As a result, a saltwater protection case, which has been used during conventional saltwater spraying tests of stator stacks, is no longer required. As a result, the test facility is simpler and less expensive.

In addition, after acrylic resin 40 permeates the gaps of stator core 12 using vacuum impregnation, as shown in Figures 9A to 9C, pressure is applied inside the resin impregnation tank 32. Therefore, acrylic resin 40 thoroughly fills the gaps 16 in the stator core 12.

The present invention is described in an embodiment in which a stator stack is employed; however, the present invention can also be applied to the rotor stack of a resolver, and other assorted laminated silicon steel plate parts.

In accordance with the present invention, a corrosion protection method has been described for laminated silicon steel plates that are fixed together to form an integral part. The steel lamination is vacuum-impregnated with a highly permeable acrylic resin prior to applying an insulation coating. The acrylic resin fills the gaps and covers edges of the steel parts and is cured. The method provides saltwater protection for the parts, and consequently, the effects include, for example, a simplification of a saltwater protection test and a decrease in costs.

The disclosure is intended to explain how to fashion and use various embodiments in accordance with the invention rather than to limit the true, intended and fair scope and spirit thereof. The forgoing description is not intended to be exhaustive or to limit the invention to the precise form disclosed. Modifications or variations are possible in light of the above teachings. The embodiments were chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. A corrosion prevention method, comprising:
stacking steel layers (11) to form a lamination (10);
fixing the layers (11) to one another;
vacuum impregnating the lamination (10) with an acrylic resin (40), which has a high permeability, to fill gaps (16), which exist between the stacked layers (11), with the acrylic resin (40);
curing the acrylic resin (40); and
applying an insulation coating to the lamination (10).

2. A corrosion prevention method according to Claim 1, wherein vacuum impregnating the lamination (10) further comprises:
dipping the lamination (10) in liquid acrylic resin (40) in a container (32), wherein air is exhausted to create a vacuum within the container (32), and
applying pressure inside the vacuum container (32) to pressurize the container (32).

3. A corrosion prevention method according to Claim 1, wherein curing the acrylic resin (40) comprises immersing the lamination (10) in warm water.

4. A corrosion prevention method according to Claim 2, wherein curing the acrylic resin (40) further comprises immersing the lamination (10) in warm water.

5. A corrosion prevention method according to Claim 1, further comprising applying a shot blasting treatment to the lamination (10) after curing the acrylic resin (40).

6. A corrosion prevention method according to Claim 2, further comprising applying a shot blasting treatment to the lamination (10) after curing the acrylic resin (40).

7. A corrosion prevention method according to Claim 3, further comprising applying a shot blasting treatment to the lamination (10) after curing the acrylic resin (40).

8. A corrosion prevention method according to Claim 1, wherein the application of an insulation coating (15) includes using anion electro deposition.

9. A method of producing a stator stack, comprising:
press punching a plurality of thin plates to form annular plates (11);
laminating and fixing the annular plates (11) to form a stator (12);
vacuum-impregnating the stator (12) with resin (40) to fill gaps, which exist between the plates (11), with the resin (40);
curing the resin (40) by heating the stator (12) to a predetermined temperature;
applying a shot blasting treatment to the stator (12) to remove excess cured resin (40);
applying an insulating coating (15) to the stator (12); and
mounting insulators (13) on opposite sides of the stator (12).

10. A method of producing a stator (12) according to Claim 9, wherein the plates (11) include silicon steel.

11. A method of producing a stator stack (10) according to Claim 9, wherein the resin (40) includes an acrylic resin (40).

12. A method of producing a stator stack (10) according to Claim 9, wherein the application of the insulating coating (15) further comprises using anion electrodeposition.

13. A method of producing a stator (12) according to Claim 9, further comprising:
coiling windings (14) around fixed magnetic poles (11b) of the stator (12);
varnishing the windings (14) to prevent shifting of the windings (14); and
drying the windings (14).

14. A stator (12), comprising:
a laminated stack including gaps (16) between layers (11) of the stack, two opposed side surfaces, edges, and fixed magnetic poles (11b);
resin impregnating the gaps (16) of the laminated stack (10);
an insulator (13) provided on each of opposed side surfaces of the of laminated stack (10); and
a plurality of windings (14) coiled around the fixed magnetic poles (11b) of the laminated stack (10).

15. A stator (12) according to Claim 14, wherein the laminated stack (10) includes a plurality of steel plates (11).

16. A stator (12) according to Claim 14, wherein the resin (40) includes an acrylic resin (40).

17. A stator (12) according to Claim 15 further comprising an insulation layer (15) covering the impregnated resin (40).
